# EUROPÄISCHE PATENTSCHRIFT

(11) **EP 4 040 939 B1**
(45) Veröffentlichungstag und Bekanntmachung des Hinweises auf die Patenterteilung: **29.11.2023**
(21) Anmeldenummer: 20793575.0
(22) Anmeldetag: 06.10.2020
(51) Int. Cl.: A01D 41/14, A01D 61/00

(54) **SCHNEIDWERK MIT BEWEGLICHEN SEITENWÄNDEN**
COMBINE HARVESTER HEADER WITH MOVABLE SIDE WALLS
TÊTE DE MOISSONNEUSE-BATTEUSE AVEC DES PANNEAUX LATÉRAUX MOBILES

(30) Priorität: 11.10.2019 DE 102019127509
(43) Veröffentlichungstag der Anmeldung: 17.08.2022
(73) Patentinhaber: Carl Geringhoff GmbH & Co. KG, 59227 Ahlen (DE)
(72) Erfinder: SUDHUES, Steffen, 59227 Ahlen (DE); POKRIEFKE, Michael, 27798 Hude (DE)
(74) Vertreter: Weeg, Thomas
(86) Internationale Anmeldenummer: PCT/EP2020/077911
(87) Internationale Veröffentlichungsnummer: WO 2021/069398

(56) Entgegenhaltungen:
- EP-A2- 2 710 880
- DE-A1-102011 116 341
- US-A1- 2019 000 015

## Beschreibung

Die vorliegende Erfindung bezieht sich auf ein Schneidwerk zum Anbau an eine Erntemaschine mit einem sich zumindest im Wesentlichen über die Arbeitsbreite des Schneidwerks erstreckenden Rahmen, der aus mehreren Rahmenteilen zusammengesetzt ist, die sich jeweils über eine Teilarbeitsbreite erstrecken und die gelenkig um eine sich zumindest annähernd in Arbeitsrichtung des Schneidwerks erstreckende Achse miteinander verbunden sind, an der Vorderseite des Schneidwerks angeordneten und mit dem Rahmen verbundenen Schneidelementen, Förderflächen und Förderelementen zur Abförderung des geschnittenen Ernteguts von den Schneidelementen zu einer Abgabestelle, von denen zumindest einzelne von der Förderfläche in vertikaler Richtung von der Förderfläche beabstandet angeordnete Förderelemente an einer Welle gehalten sind, die sich quer zur Arbeitsrichtung des Schneidwerks über zumindest eine Teilarbeitsbreite des Schneidwerks erstreckt, und Seitenwänden, denen Halmteiler zugeordnet sind, die die Arbeitsbreite des Schneidwerks begrenzen.

Wenn in dieser Beschreibung von "vorne" und "hinten" die Rede ist, so werden diese Begriffe immer bezogen auf die Arbeitsrichtung des Schneidwerks verwendet. Die Arbeitsrichtung ist die Richtung, in die das Schneidwerk bewegt wird, um Erntegut zu schneiden.

Aus der Schrift DE 10 2011 116 341 A1 ist ein Schneidwerk bekannt, das aus mehreren Rahmenteilen zusammengesetzt ist, die sich jeweils über eine Teilarbeitsbreite erstrecken, und die gelenkig um eine sich zumindest annähernd in Arbeitsrichtung des Schneidwerks erstreckende Achse miteinander verbunden sind. In dem in dieser Schrift gezeigten Ausführungsbeispiel ist ein mittleres Rahmenteil offenbart, das mit zwei seitlichen Rahmenteilen gelenkig verbunden ist. Die in dieser Schrift offenbarten Förderflächen eines Draper-Schneidwerks werden durch umlaufend angetriebene Förderbänder gebildet, die das geschnittene Erntegut von dem jeweiligen Schnittpunkt am Messerbalken als Schneidelement zu einer mittigen und rückwärtig angeordneten Abgabestelle abfördern. Die Förderbänder bilden auf diese Weise gleichzeitig Förderelemente aus, und die Förderfläche und die Förderelemente befinden sich in einer identischen Ebene.

Es ist aber auch möglich, die Förderfläche von Schneidwerken nicht aktiv mit einem Bandförderer wie bei Draper-Schneidwerken auszugestalten, sondern auch passiv mit einer Schneidwerksmulde mit einem Blechboden, über den das Erntegut mittels gesonderter Förderelemente abgefördert wird. Bei den in diesen Schneidwerken mit starrem Blechboden eingesetzten Förderelementen kann es sich beispielsweise um rotierend angetriebene Förderschnecken handeln, die Schneckenbleche aufweisen, die an einer Welle gehalten sind, die sich quer zur Arbeitsrichtung des Schneidwerks über zumindest eine Teilarbeitsbreite des Schneidwerks erstreckt, und bei deren Drehung das Erntegut von den Schneckenblechen mitgenommen wird. Außerdem ist es bei Draper-Schneidwerken möglich, oberhalb der Förderbänder zusätzliche Förderschnecken anzuordnen. Die Förderschnecken können dazu dienen, Erntegut parallel zu den Förderbändern abzufördern. Eine Förderschnecke kann aber auch dazu dienen, als Einzugsschnecke in ihrem Wirkbereich angesammeltes Erntegut in Richtung der Abgabestelle abzufördern, wobei die Förderschnecke Erntegut dann auch quer zur Förderrichtung eines mittigen und entgegen der Arbeitsrichtung des Schneidwerks fördernden Förderbands fördern kann. Förderschnecken sind regelmäßig in vertikaler Richtung von der Förderfläche beabstandet. Förderschnecken können zusätzlich als Rotationsförderer ausgestaltet sein, um Erntegut nach hinten zur Abgabestelle zu befördern, indem sie mit gesteuerten Fingern versehen sind, oder es werden gesonderte Rotationsförderer vorgehalten, die nur dem Zweck dienen, mit Mitnehmern vor der Abgabestelle angesammeltes Erntegut nach hinten in die Abgabestelle abzufördern.

Als weiteres Förderelement sind Schneidwerke mit Haspeln ausgestattet, die sich quer zur Arbeitsrichtung des Schneidwerks erstrecken. Die Haspeln sind rotierend angetrieben und tauchen mit den auf einer Querstange gehaltenen Haspelzinken bei der Erntearbeit in einer abwärts gerichteten Bewegung von oben und je nach Haspelstellung in horizontaler Richtung vor oder hinter dem Messerbalken in den Bestand des Ernteguts ein, um das Erntegut beim Schnitt abzustützen und nach dem Schnitt auf der Förderfläche abzulegen. Die Haspeln sind an höhenverstellbaren Haspeltragarmen gehalten, die von einer sich quer zur Arbeitsrichtung des Schneidwerks über zumindest eine Teilarbeitsbreite des Schneidwerks erstreckende Torsionswelle gehalten und über die Torsionswelle mit dem Rahmen verbunden sind. Die Höhenverstellung der Haspel erfolgt über eine Drehung der Torsionswelle.

Bei Schneidwerken, die aus mehreren Rahmenteilen zusammengesetzt sind, die sich jeweils über eine Teilarbeitsbreite erstrecken und die gelenkig um eine sich zumindest annähernd in Arbeitsrichtung des Schneidwerks erstreckende Achse miteinander verbunden sind, ergibt sich das Problem, dass sich bei Schwenkbewegungen der Rahmenteile zueinander Längendifferenzen an den seitlichen äußeren Enden zwischen den äußeren Enden der Förderflächen, die sich zumindest annähernd in einer gleichen vertikalen Höhe wie die Schwenkachsen befinden, und den äußeren Enden der Förderelemente ergeben, die von den Förderflächen und damit auch von den Schwenkachsen in vertikaler Richtung beabstandet an einer Welle gehalten sind, die sich quer zur Arbeitsrichtung des Schneidwerks über zumindest eine Teilarbeitsbreite des Schneidwerks erstreckt. Die Wellen können in einer Gleitlagerung gehalten sein, die eine Relativbewegung der Welle zum Rahmen in axialer Richtung der Welle zulässt, um Längendifferenzen bei Schwenkbewegungen der Rahmenteile ausgleichen zu können. Die Längen der Förderelemente haltenden Wellen sollten dann aber so bemessen und die Förderelemente mit ihren Hüllkreisen so auf den Wellen angeordnet sein, dass sie bei extremen Schwenklagen der Rahmenteile zueinander nicht mit den Seitenwänden des Schneidwerks kollidieren. Bei weniger extremen Schwenklagen der Rahmenteile zueinander sind die Wellen mit den daran befestigten Förderelementen dann aber je nach aktuellen Geometrien zu lang oder zu kurz, um den dann vorhandenen Abstand zwischen dem äußeren Ende des Hüllkreises der Förderelemente und der Seitenwand des Schneidwerks zu überbrücken, ohne bei Schwenkbewegungen mit der Seitenwand zu kollidieren. Dort befinden sich dann je nach Schwenklage unterschiedlich breite Freiräume, in denen die an den Wellen gehaltenen Förderelemente bei weniger extremen Schwenklagen nicht wirksam sind. Da sich die extremen Schwenklagen nur in einem geringen Teil der gesamten Nutzungszeit eines Schneidwerks einstellen, bedeutet das, dass die Förderelemente im Bereich eines Freiraums während der überwiegenden Nutzungszeit des Schneidwerks nicht wirksam sind.

Die Freiräume, in denen Förderelemente nicht wirksam sind, wirken sich insbesondere bei der Haspelfunktion nachteilig aus. Werden die Ernteguthalme beim Schnitt nicht von den Haspelzinken abgestützt und auf die Förderfläche abgeworfen, können sie nach dem Schnitt vor den Messerbalken fallen, wo sie vom Schneidwerk nicht mehr aufgenommen werden. Außerdem kann sich im Bereich des Freiraums geschnittenes Erntegut aufstauen, das dann als Materialballen nicht abgefördert wird und noch zu schneidendes Erntegut zur Seite und nach unten wegdrückt, bevor es vom Messerbalken geschnitten werden kann. Auch dadurch werden Erntegutverluste verursacht. Bedenkt man, dass die Freiräume je nach Schwenkwinkeln und Arbeitsbreiten der Rahmenteile auf einer Seite eines Schneidwerks allein bis zu 30 cm Breite ausmachen können, ergeben sich bei einer Arbeitsbreite des Schneidwerks von beispielsweise insgesamt 10 m Teilbreiten von 60 cm und damit 6 %, in denen bei wenig extremen Schwenklagen der Rahmenteile die Haspelfunktion nicht verfügbar ist. Auch bei anderen Förderelementen als der Haspel, wie beispielsweise bei den Förderschnecken, wirkt sich eine Teilarbeitsbreite von 6 %, in denen die Förderschnecken nicht wirksam sind, nachteilig auf den Gutfluss und Materialverluste des Schneidwerks aus.

Es ist die Aufgabe der vorliegenden Erfindung, die Freiräume an den äußeren Enden von Förderelementen zu verkleinern, in denen je nach Schwenklage der Rahmenteile zueinander die Förderelemente unwirksam sind.

Die Aufgabe wird für ein gattungsgemäßes Schneidwerk gelöst, indem die Seitenwände quer zur Arbeitsrichtung des Schneidwerks und zu dem Rahmen oder den jeweils zugehörigen Rahmenteilen beweglich ausgebildet sind. Durch die beweglich ausgebildeten Seitenwände können die Freiräume zwischen den äußeren Enden von Förderelementen und den angrenzenden Seitenwänden kleiner gehalten werden, als das bei starr mit einem Rahmen oder zugehörigen Rahmenteil verbundenen Seitenwänden möglich wäre. Die Seitenwände werden dabei bevorzugt so verschwenkt, dass sie in den verschiedenen Schwenklagen, die ein Rahmenteil einnehmen kann, dicht an den äußeren Enden der Förderelemente gehalten sind, ohne mit diesen zu kollidieren.

Nach einer Ausgestaltung der Erfindung ist die zumindest eine Seitenwand mit ihrem oberen Teil über eine Koppelstange mit einem im innenliegenden Bereich des Schneidwerks gelegenen Abstützpunkt verbunden, der Abstützpunkt ist in einem Abstand in vertikaler Richtung zur Achse angeordnet und die Seitenwand ist mit ihrem unteren Teil beweglich mit dem Rahmen verbunden, oder das obere Teil der Seitenwand ist über ein Scharnier, ein Kugelgelenk und/oder einen Verbindungskörper aus einem elastomeren Material, die eine Knickachse in der Seitenwand ausbilden, mit dem unteren Teil der Seitenwand verbunden.

Durch die Verbindung der Seitenwand mit einem im innenliegenden Bereich des Schneidwerks gelegenen Abstützpunkt über eine Koppelstange und die bewegliche Verbindung der Seitenwand mit dem Rahmen in ihrem unteren Teil bleibt diese in einer engen räumlichen Verbindung zu den äußeren Enden der Wellen, an der die Förderelemente gehalten sind. Die Schwenklage der Seitenwand zum Rahmenteil bestimmt sich aus einem Viergelenk, das bestimmt ist durch die Achse, um die das Rahmenteil im Verhältnis zu einem anderen Rahmenteil verschwenkt, den Anbindungspunkt, an dem die Seitenwand mit diesem Rahmenteil verbunden ist, dem Anlenkpunkt, an dem die Seitenwand mit der Koppelstange verbunden ist, und dem Anlenkpunkt, an dem die Koppelstange mit dem Abstützpunkt verbunden ist. Die Radien, mit denen das Rahmenteil um die Achse und die Koppelstange um den Abstützpunkt schwenken, sind fix. Variabel ist die Relativstellung, die das über die Seitenwand miteinander verbundene Rahmenteil und die Koppelstange durch die Schwenkbewegung zueinander einnehmen. Veränderungen in der Relativlage dieser Bauteile zueinander ergeben in dem Viergelenk zwangsläufig eine Veränderung der Schwenklage der Seitenwand in Relation zum Rahmenteil. Die Verschwenkung ist umso ausgeprägter, je größer der Abstand des Abstützpunktes zur Achse ist, um die das Rahmenteil schwenkt. Damit richtet sich die Seitenwand bei Veränderungen der Schwenklage des Rahmenteils zu an einer Welle gehaltenen, in vertikaler Richtung zur Förderfläche beabstandeten Förderelementen insbesondere in ihrem oberen Teil räumlich an der Position des äußeren Endes der Koppelstange relativ zum Rahmenteil aus und folgt nicht starr den Lageveränderungen des Rahmenteils bei Schwenkbewegungen. Da die Seitenwand über die Koppelstange an den im innenliegenden Bereich des Schneidwerks gelegenen Abstützpunkt angebunden ist, können sich die Zwischenräume zwischen der Seitenwand und den an einer Welle gehaltenen Förderelementen bei Schwenkbewegungen der Rahmenteile zueinander und sich daraus ergebenden Veränderungen der räumlichen Lage von Bauteilen zueinander nicht oder allenfalls geringfügig verändern. Durch die Ankoppelung der Seitenwand an die Koppelstange wird sogar auch der untere Teil der Seitenwand näher am Hüllkreis der Förderelemente gehalten, je nachdem, auf welche Weise der untere Teil der Seitenwand mit dem Rahmenteil verbunden ist. Durch die Koppelung des Seitenteils mit der Koppelstange wird also die Seitenwand bei einer Veränderung des Schwenkwinkels der Rahmenteile zueinander in einer Richtung quer zur Arbeitsrichtung des Schneidwerks um eine in Arbeitsrichtung weisende Achse gekippt, so dass die Seitenwand je nach Schwenklage eines zugehörigen Rahmenteils in einem unterschiedlichen Anstellwinkel zur benachbarten Förderfläche des Schneidwerks gehalten ist. Dadurch wird der Freiraum zwischen dem Hüllkreis der Förderelemente und der Seitenwand unabhängig von der Schwenklage des zugehörigen Rahmenteils möglichst klein gehalten.

Mit dem innenliegenden Bereich des Schneidwerks, in dem der Abstützpunkt gelegen ist, ist ein Bereich gemeint, der nach innen hin von den seitlichen Enden des Schneidwerks zur Mitte des Schneidwerks hin - über die Arbeitsbreite gesehen - entfernt liegt. Um die Schwenkbewegungen der Seitenwand an den konkreten Bewegungsbedarf anzupassen, der nötig ist, um den Freiraum in allen Schwenklagen der Rahmenteile möglichst klein zu halten, kann der Abstützpunkt für die Koppelstange über die Arbeitsbreite des Schneidwerks gesehen zumindest annähernd oder genau in dem Bereich liegen, in dem sich auch die Achse befindet, um die benachbarte Rahmenteile zueinander verschwenken, allerdings in einem vertikalen Abstand dazu. Bei dem Viergelenk, das ein Rahmenteil, die Koppelstange, die Seitenwand, die Achse, um die ein Rahmenteil verschwenkt, und der Abstützpunkt bilden, ergibt sich so zumindest annähernd ein Viereck in der Normalstellung, bei dem die Seitenwand in der Normalstellung gerade steht und je nach Schwenkrichtung des Rahmenteils mit dem oberen Ende nach innen oder außen kippt, wenn das Rahmenteil verschwenkt wird.

Die äußeren Enden der Haspel und/oder anderer Förderelemente bleiben dadurch in einer nahezu gleich bleibenden räumlichen Lage zur Seitenwand. Durch die Verkleinerung des Freiraums wird die Fördereffektivität der Haspel und/oder der weiteren Förderelemente erhöht.

Wenn das obere Teil der Seitenwand über ein Scharnier, ein Kugelgelenk und/oder einen Verbindungskörper aus einem elastomeren Material, die eine Knickachse in der Seitenwand ausbilden, mit dem unteren Teil der Seitenwand verbunden ist, kann die von der Koppelstange auf die Seitenwand übertragene seitliche Bewegung auch durch eine Einknickbewegung des oberen Teils der Seitenwand entlang der Knickachse durch die Seitenwand in Verhältnis zum unteren Teil der Seitenwand ausgeglichen werden. Je tiefer die Knickachse liegt, umso kleiner ist der Freiraum zwischen der Seitenwand und einem benachbarten Förderelement. Die Knickachse kann also auch unmittelbar in Höhe der Förderfläche der Förderelemente oder darunter liegen. Die Seitenwand ist bei dieser Ausgestaltung also kein starres Bauteil mehr, sondern kann durch eine räumliche Verlagerung des oberen Teils der Seitenwand die relative seitliche Bewegung der Koppelstange in axialer Richtung im Verhältnis zum Schneidwerksteil ausgleichen. Der untere Teil der Seitenwand kann dann fest mit dem Seitenteil verbunden sein. Als technisch gleichwertig ist eine Seitenwand anzusehen, die nicht eine präzise definierte Knickachse aufweist, sondern in sich elastisch und flexibel ausgebildet ist, beispielsweise durch die Verwendung eines biegeelastischen Materials, so dass sie aufgrund ihres Materials und dessen Dimensionierung eine flexible Anpassung der Seitenwand bei relativen seitlichen Verlagerungen der Koppelstange im Verhältnis zum Rahmenteil ermöglicht.

Zusammenfassend gibt es also zwei Möglichkeiten, den Längenversatz zwischen einer Koppelstange und dem Rahmenteil bei Schwenkbewegungen des Rahmenteils über eine Verschwenkung der Seitenwand auszugleichen: entweder wird die Seitenwand insgesamt bewegt, um den Längenversatz zumindest teilweise auszugleichen, oder die Seitenwand ist geteilt, und der Längsversatz wird über den beweglichen Teil der Seitenwand ausgeglichen.

Der einer Seitenwand zugeordnete Halmteiler dient dazu, mit seiner Spitze dem Messerbalken vorauseilend den Bestand des zu erntenden Halmgutes bei der Fahrt der Erntemaschine in den Bestand hinein in einen ersten Teil aufzuteilen, der nachfolgend unmittelbar vom Messerbalken geschnitten und abgefördert wird, und in einen zweiten Teil, an dem sich das Schneidwerk vorbeibewegt und an dem aktuell keine Erntearbeiten ausgeführt werden, bis die Erntemaschine den vom Halmteiler abgeteilten zweiten Teil so anfährt, dass dieser nun als erster Teil abgeerntet wird. Indem der Halmteiler eindeutig zuordnet, welches Erntegut im Randbereich der Fahrgasse noch zur Erntefahrt dieser Erntemaschine oder einer der nächsten Erntemaschinen gehört, werden Anstöße des Schneidwerks an einzelnen Pflanzenstängeln mit daraus möglicherweise resultierenden Körnerverlusten vermieden.

Nach einer Ausgestaltung der Erfindung sind zumindest einzelne in vertikaler Richtung von der Förderfläche beabstandet angeordnete Förderelemente an einer Welle gehalten, die sich quer zur Arbeitsrichtung des Schneidwerks über zumindest eine Teilarbeitsbreite des Schneidwerks erstreckt und die in einem auf dem Rahmen oder den Rahmenteilen abgestützten Gleitlager in axialer Richtung beweglich gehalten ist, und als Koppelstange ist diese Welle verwendet. Bei dieser Lösung ist es nicht erforderlich, eine gesonderte Koppelstange als Antrieb für eine Verschwenkbewegung zu nutzen, sondern es kann eine Welle eines vorhandenen Förderelements verwendet werden, um die Seitenwand zu verschwenken. Bei einer solchen Lösung kann beispielsweise ein Kugelgelenk, ein Getriebe oder ein Kreuzgelenk, über das ein zum äußeren Rand des Schneidwerks weisender Teil der Welle gehalten und abgestützt ist, den Abstützpunkt für die Welle bilden, der Bestandteil des Viergelenks ist.

Nach einer Ausgestaltung der Erfindung ist als Koppelstange eine Torsionswelle eines Haspeltragarms, eine Welle eines Schneckenförderers und/oder eine Antriebswelle verwendet. Die Torsionswelle eines Haspeltragarms, eine Antriebswelle und/oder eine Welle eines Schneckenförderers sind in einem Schneidwerk häufig vorhanden, um Erntegut abfördern zu können. Diese Wellen können mit einer leichten Modifikation oder geeigneten Anbauteilen so ausgestaltet werden, dass sie als weitere Funktion die Seitenwand verschwenken können. Ist an dem Schneidwerk kein Schneckenförderer oder keine geeignet ausgerichtete Antriebswelle vorhanden, kann die Seitenwand allein mit der Torsionswelle in eine gewünschte Richtung gekippt werden, oder entsprechend nur mit der Antriebswelle oder der Welle eines Schneckenförderers. Liegt die Torsionswelle ungünstig zur Seitenwand und ist ein Schneckenförderer oder eine passend ausgerichtete und gelagerte Antriebswelle vorhanden, die günstiger zur Seitenwand liegen, kann die Seitenwand auch allein über eine Verbindung zu dieser Welle verschwenkt werden. Schließlich kann die Seitenwand gleichzeitig mit der Torsionswelle, einer Antriebswelle und der Welle einer Förderschnecke verbunden sein.

Nach einer Ausgestaltung der Erfindung ist das Koppelelement in Verbindungsrichtung nicht längselastisch ausgebildet. Über die nicht längselastische Verbindung werden Lageveränderungen zwischen dem Rahmenteil und der Torsionswelle eines Haspeltragarms und/oder der Welle eines Schneckenförderers unmittelbar mit einer Zug- oder Druckkraft auf die Seitenwand übertragen, indem das Koppelelement die Seitenwand in eine Winkellage zur Förderebene verstellt, die zur aktuellen Verschwenkstellung der Rahmenteile zueinander passt.

Nach einer Ausgestaltung der Erfindung ist das Koppelelement über ein erstes Gelenk mit der Torsionswelle eines Haspeltragarms und/oder der Welle eines Schneckenförderers und über ein zweites Gelenk mit der Seitenwand verbunden. Über die zwei Gelenke können Winkelveränderungen zwischen dem Koppelelement und der Torsionswelle und/oder der Welle eines Schneckenförderers ausgeglichen werden, die sich durch eine Veränderung der relativen Lage dieser Bauteile im Verhältnis zum Rahmenteil ergeben.

Nach einer Ausgestaltung der Erfindung ist das Koppelelement mit der Torsionswelle eines Haspeltragarms und/oder der Welle eines Schneckenförderers über ein Lager verbunden, das Rotationsbewegungen der Torsionswelle und/oder der Welle eines Schneckenförderers erlaubt. Durch das Rotationsbewegungen erlaubende Lager wird das Koppelelement von Belastungen aus solchen Rotationsbewegungen entkoppelt, die die Torsionswelle und/oder die Welle des Schneckenförderers funktionsnotwendig ausführen müssen, um die Haspelhöhe anzupassen oder Erntegut zu befördern. Bei dem Lager kann es sich beispielsweise um ein Gleit- oder Kugellager handeln. Das Lager ist aber so ausgestaltet, dass es die Zug- und Druckkräfte, die von der Torsionswelle und/oder von der Welle des Schneckenförderers in axialer Richtung der Torsionswelle und/oder der Welle des Schneckenförderers auf das Koppelelement übertragen werden sollen, auf das Koppelelement überträgt.

Nach einer Ausgestaltung der Erfindung ist die Seitenwand über ein Scharnier, ein Kugelgelenk und/oder einen Verbindungskörper aus einem elastomeren Material mit dem Rahmenteil verbunden. Wenn der Anstellwinkel der Seitenwand im Verhältnis zum Rahmenteil über das Koppelelement veränderlich sein soll, ist es erforderlich, die Seitenwand so mit dem Rahmenteil zu verbinden, dass die Verbindung der Seitenwand mit dem Rahmenteil eine solche Bewegung auch zulässt. Eine entsprechende Beweglichkeit ist über ein Scharnier, ein Kugelgelenk und/oder einen Verbindungskörper aus einem elastomeren Material gegeben.

Nach einer Ausgestaltung der Erfindung ist die Torsionswelle mit zumindest zwei Haspeltragarmen verbunden, über die die Höhenlage der darauf gelagerten Haspel verstellbar ist, die Torsionswelle ist zumindest zweifach in einem Abstand zueinander gelagert und das Koppelelement greift endseitig außerhalb des Zwischenraums zwischen den beiden Lagern an der Torsionswelle an. Bei dieser Ausgestaltung bildet die Torsionswelle zusammen mit den Haspeltragarmen, der Haspel, der Lagerung der Torsionswelle und der Verbindung der Torsionswelle mit der Seitenwand eine gemeinsame Funktionsbaugruppe, die leicht mit einem Antrieb verstellbar ist und mit wenigen Bauteilen auf kostengünstige Weise mehrere Funktionen in einer Baugruppe verwirklicht. Wenn die Verbindung der Torsionswelle mit der Seitenwand über das Koppelelement außerhalb des Zwischenraums zwischen den beiden Lagern liegt, kann auch auf aufwendige Kraftübertragungspfade verzichtet werden.

Nach einer Ausgestaltung der Erfindung ist an der Torsionswelle in zumindest einer Bewegungsrichtung ein mechanischer Endanschlag ausgebildet. Durch den Endanschlag wird die Bewegung der Torsionswelle und/oder der Welle des Schneckenförderers in einer Richtung begrenzt. Extreme Längsverschiebungen, die zu Funktionsbeeinträchtigungen oder sogar Schäden an Bauteilen führen könnten, werden dadurch vermieden. Natürlich kann auch noch ein zweiter Endanschlag vorhanden sein, mit dem eine Bewegung in die entgegengesetzte axiale Richtung der Torsionswelle unterbunden wird.

Nach einer Ausgestaltung der Erfindung ist der Abstützpunkt mit einem Stellantrieb verlagerbar und/oder die Koppelstange mit einem Stellantrieb längenveränderlich. Durch den Stellantrieb kann die Schwenkbewegung der Seitenwand noch beeinflusst werden. So ist es möglich, die Seitenwand auf eine bestimmte Winkellage einzustellen, die in einer Erntesituation gewünscht ist, oder es wird eine Steuerung oder Regelung eingesetzt, die in Abhängigkeit von der Schwenklage des zugehörigen Rahmenteils die Lage des Abstützpunkts und/oder die Länge der Koppelstange verändert, um den Freiraum zwischen der Seitenwand und einem benachbarten Förderelement möglichst klein zu halten.

Nach einer Ausgestaltung der Erfindung ist zwischen zumindest dem Rahmen oder einem Rahmenteil und der zugehörigen Seitenwand ein motorischer Stellantrieb vorhanden, mit dem die Seitenwand quer zur Arbeitsrichtung des Schneidwerks und zu dem Rahmen oder dem jeweils zugehörigen Rahmenteil beweglich ist. Bei dem motorischen Stellantrieb kann es sich um einen hydraulisch, elektrisch, pneumatisch oder auf sonstige Weise angetriebenen Motor handeln. Der Stellantrieb ist fest auf dem Rahmen oder dem Rahmenteil montiert und mit der Seitenwand so verbunden, dass er mit seinen Stellbewegungen die Seitenwand quer zur Arbeitsrichtung des Schneidwerks und zu dem jeweils zugehörigen Rahmenteil bewegt. Auf sonstige mechanische Koppelemente zwischen einer Seitenwand und anderen Bauteilen des Schneidwerks kann bei dieser Lösung verzichtet werden. Der Stellantrieb kann die Schwenklage der zugehörigen Seitenwand in Stufen oder stufenlos verstellen. Wie vorstehend bereits erläutert, kann die Seitenwand starr ausgebildet und gelenkig mit dem Rahmen oder Rahmenteil verbunden sein und wird insgesamt vom Stellantrieb in verschiedene Schwenkstellungen bewegt, oder die Seitenwand verfügt über eine Knickachse, um die herum nur der obere Teil der Seitenwand vom Stellantrieb verschwenkt wird.

Nach einer Ausgestaltung der Erfindung ist an den Stellantrieb eine elektronischen Steuerung oder Regelung angeschlossen, die den Stellantrieb betreibt. Der Stellantrieb kann mit einer Folgesteuerung versehen sein, mit der der Stellantrieb den Schwenkbewegungen folgt, die das mit der Seitenwand versehene Rahmenteil im Verhältnis zu einem benachbarten Rahmenteil ausführt. Die Schwenklage kann mit Sensoren überwacht werden, die ihre Sensordaten an die Steuerung oder Regelung übermitteln. Als Sensoren können aber auch Näherungssensoren mit der Steuerung oder Regelung verbunden sein, die den Abstand der Seitenwand zu benachbarten Förderelementen messen und dieses Messsignal an die Steuerung oder Regelung übermitteln. Die Steuerung oder Regelung ist mit einer geeigneten Software ausgestattet, um die eingehenden Sensorwerte auszuwerten und daraus Stellsignale abzuleiten, mit denen der Stellantrieb bewegt wird. Auch andere Steuerungen oder Regelungen für eine geeignete Verstellung des Stellantriebs sind möglich.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar. Der Schutzbereich der Erfindung wird durch die Ansprüche definiert.

Die Erfindung wird nun anhand eines bevorzugten Ausführungsbeispiels sowie unter Bezugnahme auf die beigefügten Zeichnungen näher erläutert.

### Es zeigen:

- Fig. 1:: eine Ansicht auf ein Schneidwerk von schräg vorne,
- Fig. 2:: eine Ansicht auf ein Schneidwerk von schräg hinten,
- Fig. 3:: eine vergrößerte Teilansicht auf ein äußeres Ende des Schneidwerks mit einer Seitenwand,
- Fig. 4a - 4c:: jeweils eine Ansicht der Verbindungszone zwischen der Seitenwand und dem Rahmenteil mit einer unterschiedlichen Schwenkstellung der Seitenwand,
- Fig. 5a - 5c:: verschiedene Ausführungen einer Verbindung der Seitenwand mit der Torsionswelle,
- Fig. 6a -6c:: verschiedene Ausführungen einer Verbindung der Seitenwand mit dem Rahmenteil, und
- Fig. 7:: eine Ansicht auf ein Schneidwerk mit einer Koppelstange.

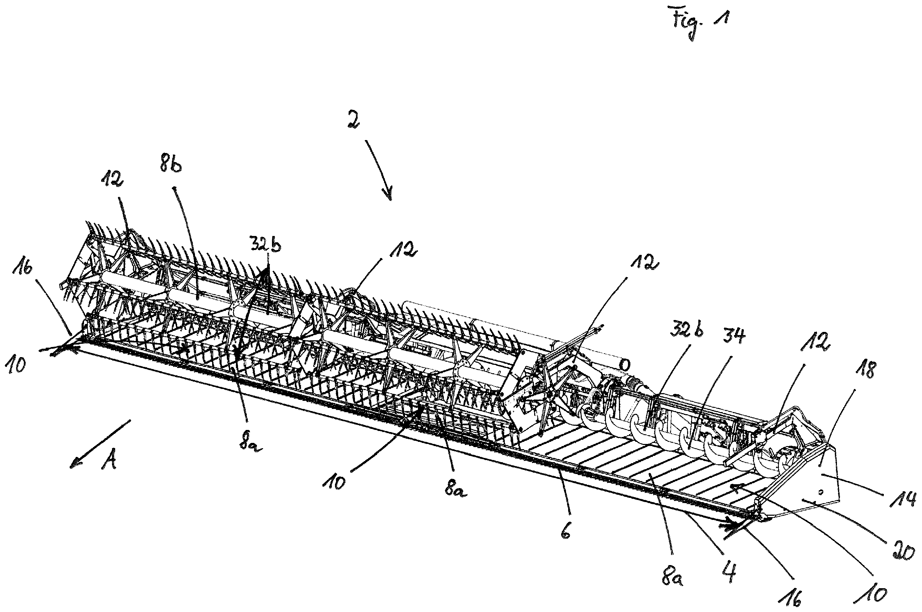

In Fig. 1 ist ein Schneidwerk 2 aus einer Ansicht von schräg vorne gezeigt. Das Schneidwerk 2 verfügt über eine Arbeitsbreite 4. An der Vorderseite des Schneidwerks 2 befindet sich ein Messerbalken als Schneidelement 6, der oszillierend angetrieben ist und über eine größere Anzahl von nebeneinander angeordneten Messerklingen verfügt.

Hinter dem Schneidelement 6 befinden sich zwei äußere Bandförderer 8a, die quer zur Arbeitsrichtung A des Schneidwerks das geschnittene Erntegut zur Mitte hin befördern, während sich in der Mitte des Schneidwerks 2 ein weiterer Bandförderer 8a befindet, der das zugeförderte Erntegut nach hinten in eine Richtung entgegen der Arbeitsrichtung A abfördert.

Über den Bandförderern 8a als ein erstes Beispiel für ein Förderelement 8 befindet sich eine Haspel 8b als ein zweites Beispiel für ein Förderelement 8, die rotierend angetrieben ist und das geschnittene Erntegut nach dem Schnitt auf den Bandförderern 8a abwirft. Im Ausführungsbeispiel bilden die Bandförderer 8a eine Förderfläche 10, auf denen das geschnittene Erntegut abgefördert wird. Bei anderen Schneidwerken als einem Draper-Schneidwerk kann die Förderfläche 10 auch als ein einfaches Bodenblech ausgebildet sein, das keinerlei Antrieb aufweist. Als weiteres Förderelement 8 ist ein Schneckenförderer 34 gezeigt, der hinter den Bandförderern 8a angeordnet ist und mit der Welle 32 b rotiert.

Die Haspel 8b ist an Haspeltragarmen 12 gehalten, die höhenverstellbar ausgebildet sind. Die Höhenverstellung der Haspel 8b ist durch einen Doppelpfeil angedeutet.

Die seitlichen äußeren Enden des Schneidwerks 2 sind durch Seitenwände 14 abgedeckt, die jeweils mit einem Halmteiler 16 verbunden sind. Der Halmteiler 16 ragt nach vorne über die Seitenwände 14 und das Schneidelement 6 hervor und teilt das vor dem Schneidwerk 2 auf dem Feld stehende Erntegut in einen ersten Teil auf, der vom Schneidwerk 2 geschnitten wird, und einen zweiten Teil, der bei einer Vorbeifahrt ungeschnitten auf dem Feld stehenbleibt. Die Seitenwand 14 verfügt über einen oberen Teil 18 sowie einen unteren Teil 20.

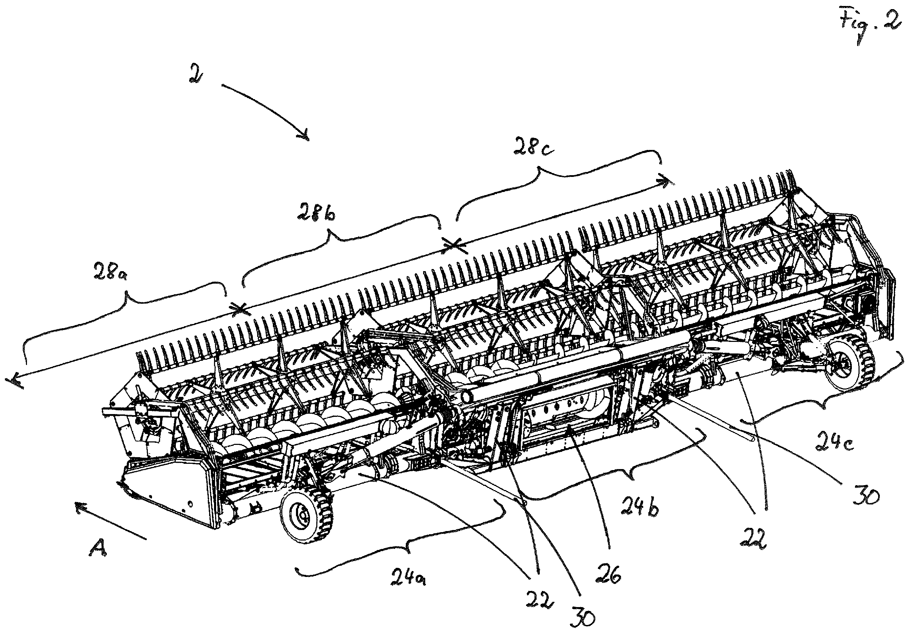

Die Fig. 2 zeigt eine Ansicht auf ein Schneidwerk 2 von schräg hinten. In dieser Ansicht ist der Rahmen 22 erkennbar, der im Ausführungsbeispiel aus drei Rahmenteilen 24a, 24b und 24c gebildet ist. Abweichend vom Ausführungsbeispiel kann der Rahmen 22 anstelle durch die Rahmenteile 24a, 24b, 24c auch von einem einzigen starren Rahmen 22 gebildet sein, der sich über die gesamte Arbeitsbreite 4 erstreckt. Im mittleren Rahmenteil 24b befindet sich in der Rückwand die Abgabestelle 26, durch die das vom Schneidwerk 2 geschnittene und abgeförderte Erntegut an den zeichnerisch nicht dargestellten Schrägförderkanal einer Erntemaschine abgegeben wird. Die Rahmenteile 24a, 24b und 24c verfügen jeweils über zugeordnete Teilarbeitsbreiten 28a, 28b und 28c. Die äußeren Rahmenteile 24a, 24c sind im Verhältnis zum mittleren Rahmenteil 24b jeweils über einer Achse 30, die zumindest annähernd in die Arbeitsrichtung A des Schneidwerks 2 ausgerichtet ist, gelenkig mit dem mittleren Rahmenteil 24b verbunden. Wenn das Schneidwerk 2 bei der Ernte mit seiner Unterseite auf dem Boden aufliegt und der Boden uneben ist, können die äußeren Rahmenteile 24a, 24c bei der Vorfahrt der Erntemaschine nach oben oder unten mit ihrem freien Ende durch eine entsprechende Schwenkbewegung um die Achse 30 ausweichen, wenn sich im Bereich ihrer Teilarbeitsbreite 28a, 28c der Boden absenkt oder anhebt. Genauso kann das mittlere Rahmenteil 24b nach oben oder unten ausweichen, wenn sich dort der Boden anhebt oder absenkt, wobei dann je nach Bodenkontur die äußeren Rahmenteile 24a, 24c mit ihren freien Enden relativ zum mittleren Rahmenteil 24b nach oben oder unten schwenken oder auf einem Niveau mit dem mittleren Rahmenteil 24b bleiben.

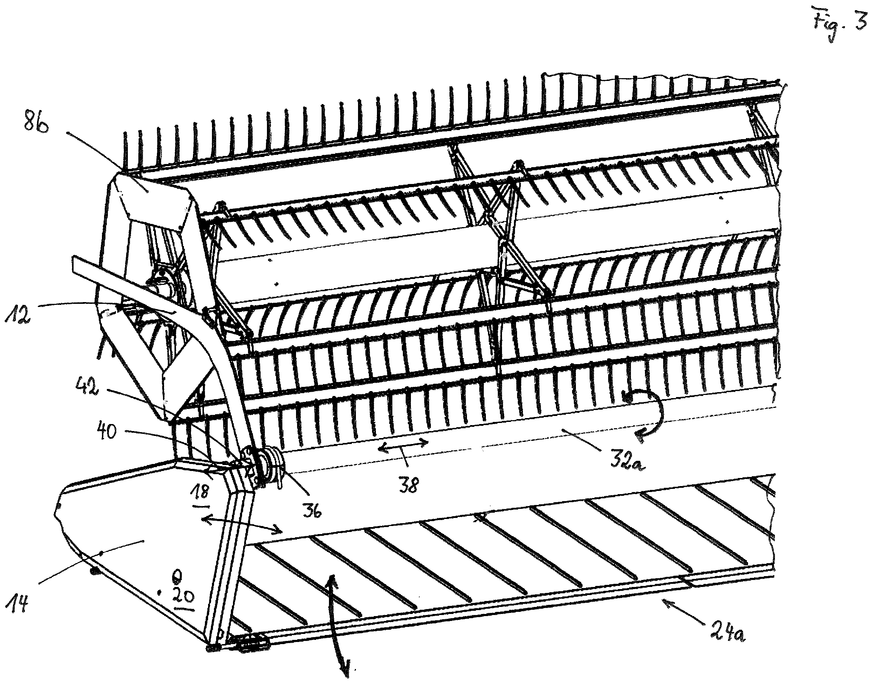

In Fig. 3 ist eine vergrößerte Teilansicht auf ein äußeres Ende des Schneidwerks 2 mit einer Seitenwand 14 gezeigt. An der Torsionswelle 32a für die Haspel 8b ist drehfest der Haspeltragarm 12 befestigt, an dem die Haspel 8b gelagert ist. Um die Haspel 8b in ihrer Höhe zu verstellen, wird die Torsionswelle 32a um ihre Längsachse herum gedreht, wie das durch den Doppelpfeil angedeutet ist. Bei einer Verschwenkbewegung des Rahmenteils 24a in vertikaler Richtung, wie ebenfalls durch einen Doppelpfeil angedeutet, verschiebt sich die räumliche Lage der Torsionswelle 32a in axialer Richtung, wie durch den Doppelpfeil 38 angedeutet, relativ zum Rahmenteil 24a. Da die Torsionswelle 32a in dem Gleitlager 36 gelagert ist, kann sich die Torsionswelle 32a in der axialen Richtung 38 im Verhältnis zum Rahmenteil 24a verschieben.

Die Torsionswelle 32a ist in Verbindungsrichtung 40 über ein Koppelelement 42 mit der Seitenwand 14 verbunden. Das Koppelelement 42 ist in dem oberen Teil 18 der Seitenwand 14 mit dieser verbunden. Der untere Teil 20 der Seitenwand 14 ist mit dem Rahmenteil 24a verbunden. Aus der in Fig. 3 gezeigten Ansicht ist nachvollziehbar, dass sich bei einer Schub- oder Zugbewegung der Torsionswelle 32a in die axiale Richtung 38 relativ zum Rahmenteil 24a der obere Teil 18 der Seitenwand 14 ebenfalls in der axialen Richtung 38 bewegt, während der untere Teil 20 der Seitenwand 14 ohne einen entsprechenden Bewegungsimpuls in einer annähernd gleichen räumlichen Lage zum Rahmenteil 24a verbleibt. Aus dieser Bewegung der Seitenwand 14 ergibt sich eine Art Kippbewegung um eine Achse, die zumindest annähernd in Arbeitsrichtung A des Schneidwerks 2 gerichtet ist.

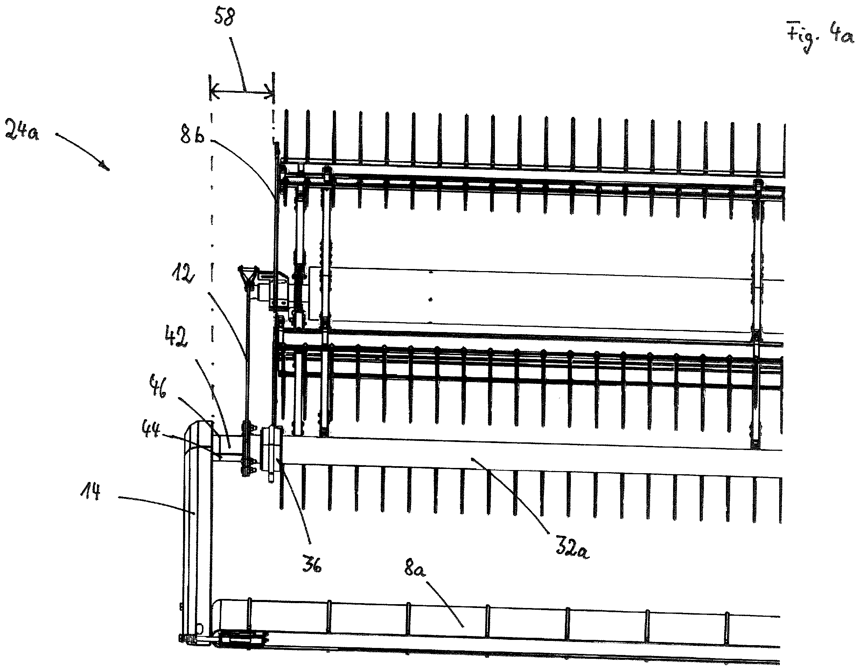

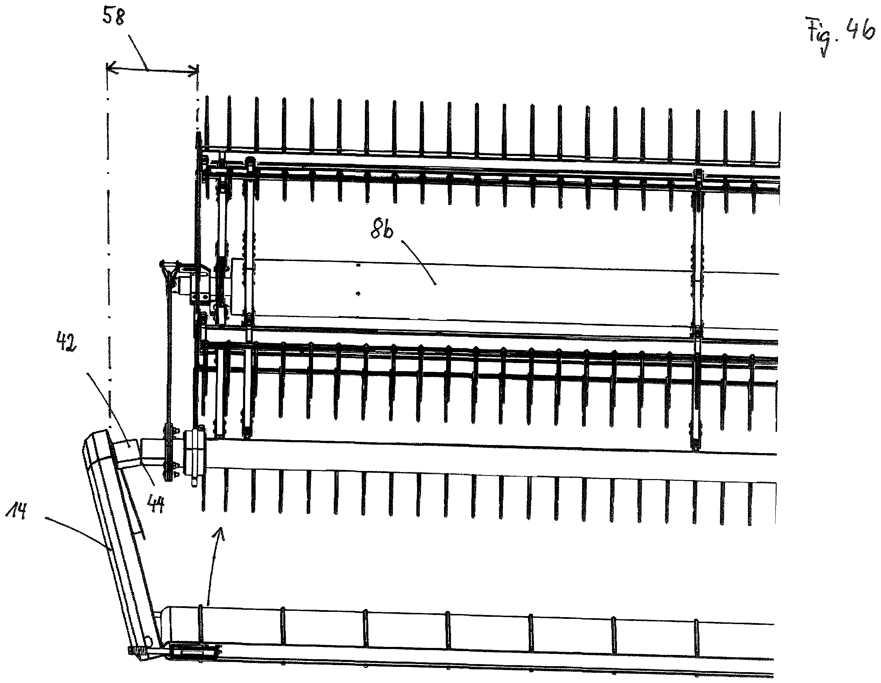

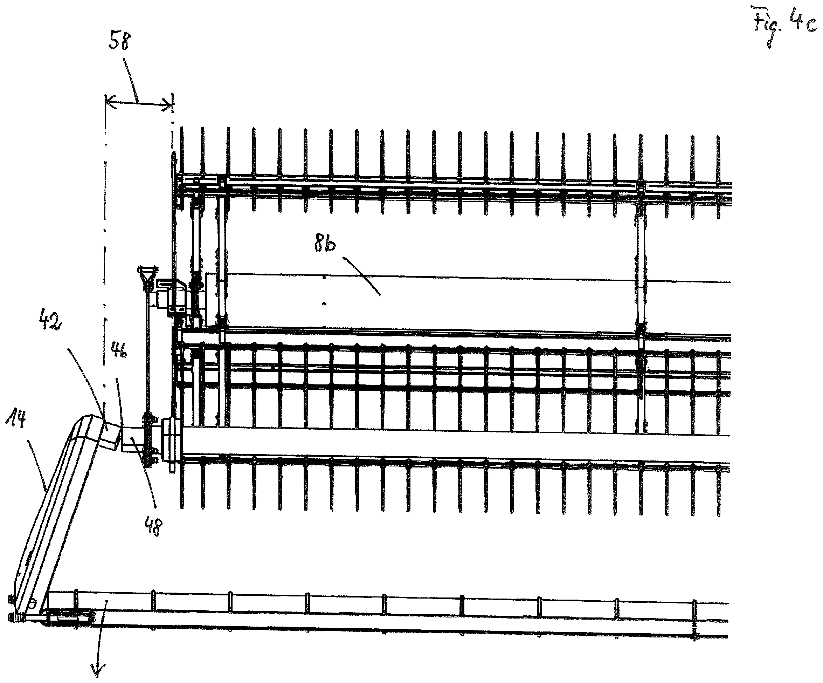

In den Fig. 4 a - 4c ist eine Ansicht der Verbindungszone zwischen der Seitenwand 14 und dem Rahmenteil 24a gezeigt, wobei sich die Seitenwand 14 in der Fig. 4a in einer mittleren Neutralstellung befindet, in der sie in vertikaler Richtung gerade steht. In der Fig. 4b ist eine Stellung der Seitenwand 14 gezeigt, in der sie mit ihrem oberen Ende nach außen geneigt ist. Eine solche Stellung ergibt sich, wenn das äußere Ende des Rahmenteils 24a nach oben hin verschwenkt ist. In der Fig. 4c ist eine Stellung der Seitenwand 14 gezeigt, in der sie mit ihrem oberen Ende nach innen geneigt ist. Eine solche Stellung ergibt sich, wenn das äußere Ende des Rahmenteils 24a nach unten hin verschwenkt ist. Im Vergleich der Fig. 4a - 4c wird deutlich, dass der Freiraum 58 zwischen der Seitenwand 14 und dem äußeren Ende der Haspel 8b unabhängig von der Schwenklage der Seitenwand 14 nahezu gleich groß bleibt.

In den in Fig. 4a - 4c gezeigten Ansichten ist erkennbar, dass das Koppelelement 42 über ein erstes Gelenk 44 mit der Torsionswelle 32a und über ein zweites Gelenk 46 mit der Seitenwand 14 verbunden ist. Über die beiden Gelenke 44, 46 können sich aus der Bewegung in axialer Richtung 38 ergebende Höhenunterschiede zwischen der Torsionswelle 32a und der Seitenwand 14 ausgeglichen werden.

Die Torsionswelle 32a ist mit dem Koppelelement 42 über ein Lager 48 verbunden, das Rotationsbewegungen der Torsionswelle 32a erlaubt. Das Lager 48 ist drehfest mit der Torsionswelle 32a und drehbar mit dem Koppelelement 42 verbunden. Das Lager 48 ist so ausgestaltet, dass es gleichwohl Zug- und Druckkräfte in axialer Richtung 38 von der Torsionswelle 32a auf die Seitenwand 14 übertragen kann.

Die vorstehend beschriebene Verbindung der Torsionswelle 32a mit dem Koppelelement 42 über das Lager 48 kann abweichend vom Ausführungsbeispiel in gleicher Weise auch bei der Welle 32b eines Schneckenförderers 34 realisiert werden, wenn diese mit der Seitenwand 14 zu deren Verschwenkung verbunden ist.

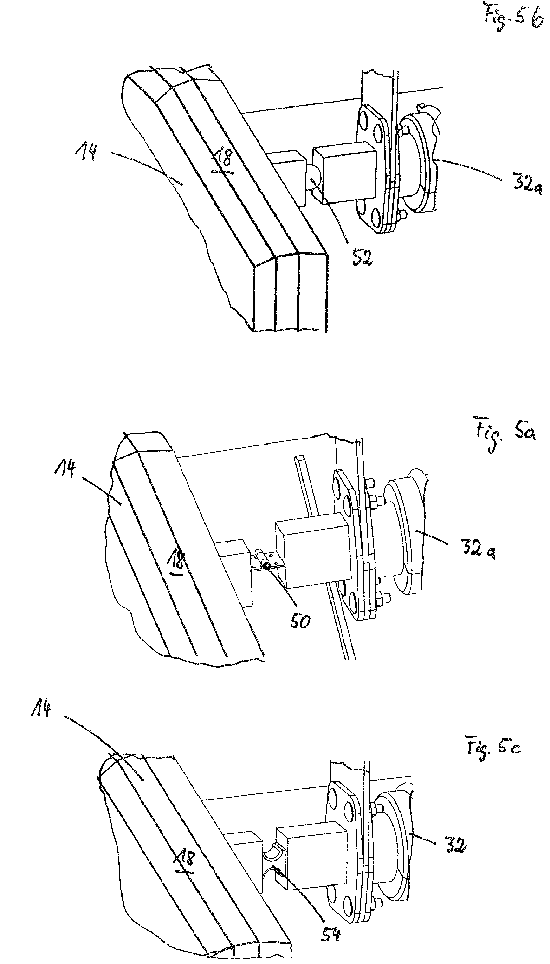

In den nachfolgenden Figuren 5a, 5b und 5c sind verschiedene Beispiele skizziert, wie die Seitenwand 14 im oberen Teil 18 mit der Torsionswelle 32a verbunden sein kann. In der Fig. 5a ist als Verbindungsmittel ein Scharnier 50 gezeigt, in der Fig. 5b ein Kugelgelenk 52 und in der Fig. 5c ein Verbindungskörper 54, der aus einem elastomeren Material hergestellt ist.

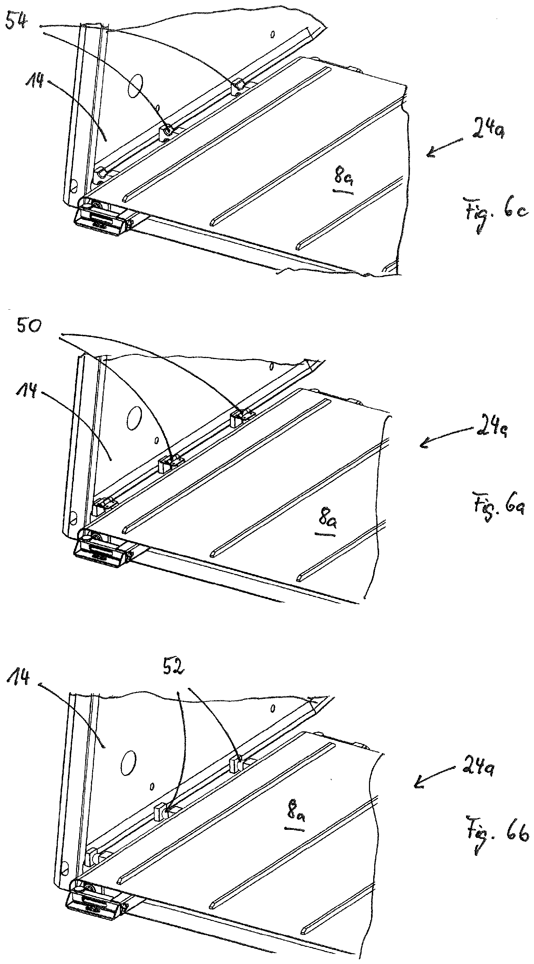

In den Figuren 6a, 6b und 6c sind verschiedene Beispiele skizziert, wie die Seitenwand 14 im unteren Teil 20 mit dem Rahmenteil 24a verbunden sein kann. In der Fig. 6a ist als Verbindungsmittel ein Scharnier 50 gezeigt, in der Fig. 6b ein Kugelgelenk 52 und in der Fig. 6c ein Verbindungskörper 54, der aus einem elastomeren Material hergestellt ist.

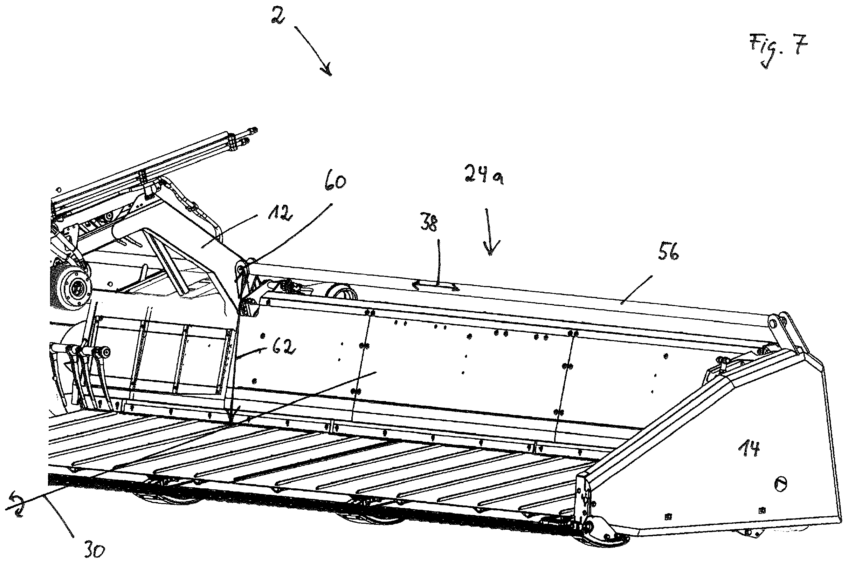

In Fig. 7 ist ein Ausführungsbeispiel mit einer Ansicht auf ein Schneidwerk 2 gezeigt, bei dem die relative Lageveränderung einer Koppelstange 56 in der axialen Richtung 38 im Verhältnis zum Rahmenteil 24a bei einer Schwenkbewegung mit ihrem freien Ende mit der Koppelstange 56 auf die Seitenwand 14 übertragen wird. Die Koppelstange 56 ist über den Abstützpunkt 60 mit einem Bauteil verbunden, das die Koppelstange in Richtung der axialen Richtung 38 abstützt. Da der Abstützpunkt 60 einen Abstand 62 in vertikaler Richtung zur Achse 30 aufweist, ergibt sich in einem Viergelenk die räumliche Lageveränderung der Koppelstange 56 zum Rahmen des Rahmenteils 24a.

Die Erfindung ist nicht auf die vorstehenden Ausführungsbeispiele beschränkt. Dem Fachmann bereitet es keine Schwierigkeiten, die Ausführungsbeispiele auf eine ihm geeignet erscheinende Weise abzuwandeln, um sie an einen konkreten Anwendungsfall anzupassen.

### Bezugsziffernliste

- 2: Schneidwerk
- 4: Arbeitsbreite
- 6: Schneidelement
- 8a: Bandförderer
- 8b: Haspel
- 10: Förderfläche
- 12: Haspeltragarm
- 14: Seitenwand
- 16: Halmteiler
- 18: oberer Teil
- 20: unterer Teil
- 22: Rahmen
- 24: Rahmenteil
- 26: Abgabestelle
- 28: Teilarbeitsbreite
- 30: Achse
- 32a: Torsionswelle
- 32b: Schneckenfördererwelle
- 34: Schneckenförderer
- 36: Gleitlager
- 38: axiale Richtung
- 40: Verbindungsrichtung
- 42: Koppelelement
- 44: erstes Gelenk
- 46: zweites Gelenk
- 48: Lager
- 50: Scharnier
- 52: Kugelgelenk
- 54: elastischer Verbindungskörper
- 56: Koppelstange
- 58: Zwischenraum
- 60: Abstützpunkt

## Patentansprüche

1. Schneidwerk (2) zum Anbau an eine Erntemaschine mit einem sich zumindest im Wesentlichen über die Arbeitsbreite (4) des Schneidwerks (2) erstreckenden Rahmen (22), der aus mehreren Rahmenteilen (24a, 24b, 24c) zusammengesetzt ist, die sich jeweils über eine Teilarbeitsbreite (28a, 28b, 28c) erstrecken und die gelenkig um eine sich zumindest annähernd in Arbeitsrichtung des Schneidwerks (2) erstreckende Achse (30) miteinander verbunden sind, an der Vorderseite des Schneidwerks (2) angeordneten und mit dem Rahmen (22) verbundenen Schneidelementen (6), Förderflächen (10) und Förderelementen (8) zur Abförderung des geschnittenen Ernteguts von den Schneidelementen (6) zu einer Abgabestelle (26), von denen zumindest einzelne in vertikaler Richtung von der Förderfläche (10) beabstandet angeordnete Förderelemente (8b, 34) an einer Welle (32b) gehalten sind, die sich quer zur Arbeitsrichtung (A) des Schneidwerks (2) über zumindest eine Teilarbeitsbreite (28a, 28b, 28c) des Schneidwerks (2) erstreckt, und Seitenwänden (14), denen Halmteiler (16) zugeordnet sind, die die Arbeitsbreite (4) des Schneidwerks (2) begrenzen, **dadurch gekennzeichnet, dass** die Seitenwände (14) quer zur Arbeitsrichtung (A) des Schneidwerks (2) und zu dem Rahmen (22) oder den jeweils zugehörigen Rahmenteilen (24a, 24c) beweglich ausgebildet sind.

2. Schneidwerk (2) nach Anspruch 1, **dadurch gekennzeichnet, dass** die zumindest eine Seitenwand (14) mit ihrem oberen Teil (18) über eine Koppelstange (56) mit einem im innenliegenden Bereich des Schneidwerks (2) gelegenen Abstützpunkt (60) verbunden ist, der Abstützpunkt (60) in einem Abstand (62) in vertikaler Richtung zur Achse (30) angeordnet ist und die Seitenwand (14) mit ihrem unteren Teil (20) beweglich mit dem Rahmen (22) verbunden ist, oder das obere Teil (20) der Seitenwand (14) über ein Scharnier (50), ein Kugelgelenk (52) und/oder einen Verbindungskörper (54) aus einem elastomeren Material, die eine Knickachse ausbilden, mit dem unteren Teil der Seitenwand (14) verbunden ist.

3. Schneidwerk (2) nach Anspruch 2, **dadurch gekennzeichnet, dass** zumindest einzelne in vertikaler Richtung von der Förderfläche (10) beabstandet angeordnete Förderelemente (8b, 34) an einer Welle (32b) gehalten sind, die sich quer zur Arbeitsrichtung des Schneidwerks (2) über zumindest eine Teilarbeitsbreite des Schneidwerks (2) erstreckt und die in einem auf dem Rahmen (22) oder den Rahmenteilen (24a, 24c) abgestützten Gleitlager in axialer Richtung beweglich gehalten ist, und diese Welle derart ausgebildet ist, dann sie als Koppelstange verwendet ist.

4. Schneidwerk (2) nach Anspruch 2 oder 3, **dadurch gekennzeichnet, dass** als Koppelstange (56) eine Torsionswelle (32a) eines Haspeltragarms (12), eine Antriebswelle und/oder eine Welle (32b) eines Schneckenförderers (32b) verwendet ist.

5. Schneidwerk (2) nach einem der vorhergehenden Ansprüche, **dadurch gekennzeichnet, dass** das Koppelelement (42) in Verbindungsrichtung (40) nicht längselastisch ausgebildet ist.

6. Schneidwerk (2) nach einem der vorhergehenden Ansprüche, **dadurch gekennzeichnet, dass** das Koppelelement (42) über ein erstes Gelenk (44) mit der Torsionswelle (32a) eines Haspeltragarms (12) und/oder der Welle (32b) eines Schneckenförderers (34) und über ein zweites Gelenk (46) mit der Seitenwand (14) verbunden ist.

7. Schneidwerk (2) nach einem der vorhergehenden Ansprüche, **dadurch gekennzeichnet, dass** das Koppelelement (42) mit der Torsionswelle (32a) eines Haspeltragarms (12) und/oder der Welle (32b) eines Schneckenförderers (34) über ein Lager (48) verbunden ist, das Rotationsbewegungen der Torsionswelle (32a) und/oder der Welle (32b) eines Schneckenförderers (34) erlaubt.

8. Schneidwerk (2) nach einem der vorhergehenden Ansprüche, **dadurch gekennzeichnet, dass** die Seitenwand (14) über ein Scharnier (50), ein Kugelgelenk (52) und/oder einen Verbindungskörper (54) aus einem elastomeren Material mit dem Rahmenteil (24a, 24c) verbunden ist.

9. Schneidwerk (2) nach einem der vorhergehenden Ansprüche, **dadurch gekennzeichnet, dass** die Torsionswelle (32a) mit zumindest zwei Haspeltragarmen (12) verbunden ist, über die die Höhenlage der darauf gelagerten Haspel (8b) verstellbar ist, die Torsionswelle (32a) zumindest zweifach in einem Abstand zueinander gelagert ist und das Koppelelement (42) endseitig außerhalb des Zwischenraums zwischen den beiden Lagern an der Torsionswelle (32a) angreift.

10. Schneidwerk (2) nach einem der vorhergehenden Ansprüche, **dadurch gekennzeichnet, dass** an der Torsionswelle (32a) in zumindest einer Bewegungsrichtung ein mechanischer Endanschlag ausgebildet ist.

11. Schneidwerk (2) nach einem der vorhergehenden Ansprüche, **dadurch gekennzeichnet, dass** der Abstützpunkt (60) mit einem Stellantrieb verlagerbar und/oder die Koppelstange (56) mit einem Stellantrieb längenveränderlich ist.

12. Schneidwerk (2) nach Anspruch 1, **dadurch gekennzeichnet, dass** zwischen dem Rahmen (22) oder zumindest einem Rahmenteil (24a, 24c) und der zugehörigen Seitenwand (14) ein motorischer Stellantrieb vorhanden ist, mit dem die Seitenwand (14) quer zur Arbeitsrichtung (A) des Schneidwerks (2) und zu dem Rahmen (22) oder dem jeweils zugehörigen Rahmenteil (24a, 24c) beweglich ist.

13. Schneidwerk (2) nach Anspruch 12, **dadurch gekennzeichnet, dass** an den Stellantrieb eine elektronischen Steuerung oder Regelung angeschlossen ist, die den Stellantrieb betreibt.

## Claims

1. A header (2) for attachment to a combine harvester having a frame (22), which extends at least substantially over the working width (4) of the header (2) and is composed of multiple frame parts (24a, 24b, 24c), which parts, in each case, extend over a partial working width (28a, 28b, 28c) and are connected to one another in an articulated manner about an axle (30) extending at least approximately in the working direction of the header (2), cutting elements (6) arranged on the front side of the header (2) and connected to the frame (22), conveying surfaces (10) and conveying elements (8) for conveying the cut crop from the cutting elements (6) to a discharge point (26), from which at least individual conveying elements (8b, 34) arranged at a distance from the conveying surface (10) in the vertical direction are held on a shaft (32b), which shaft extends transversely to the working direction (A) of the header (2) over at least a partial working width (28a, 28b, 28c) of the header (2), and side walls (14) to which crop dividers (16) are assigned which delimit the working width (4) of the header (2), **characterized in that** the side walls (14) are designed to be movable transversely to the working direction (A) of the header (2) and to the frame (22) or to the respective associated frame parts (24a, 24c).

2. The header (2) according to claim 1, **characterized in that** the at least one side wall (14) is connected at its upper part (18) via a coupling rod (56) to a support point (60) located in the inner region of the header (2), the support point (60) is arranged at a distance (62) in the vertical direction from the axle (30) and the side wall (14) at its lower part (20) is movably connected to the frame (22), or the upper part (20) of the side wall (14) is connected to the lower part of the side wall (14) via a hinge (50), a ball joint (52) and/or a connecting body (54) made of an elastomeric material forming a pivot axis.

3. The header (2) according to claim 2, **characterized in that** at least individual conveyor elements (8b, 34) arranged at a distance from the conveying surface (10) in the vertical direction are held on a shaft (32b) which extends transversely to the working direction of the header (2) over at least a partial working width of the header (2) and which is held movably in the axial direction in a sliding bearing supported on the frame (22) or the frame parts (24a, 24c), and this shaft is designed in such a way that it is used as a coupling rod.

4. The header (2) according to claim 2 or 3, **characterized in that** a torsion shaft (32a) of a reel support arm (12), a drive shaft and/or a shaft (32b) of an auger conveyor (32b) is used as the coupling rod (56).

5. The header (2) according to any of the preceding claims, **characterized in that** the coupling element (42) is not designed to be longitudinally elastic in the connection direction (40).

6. The header (2) according to any of the preceding claims, **characterized in that** the coupling element (42) is connected via a first joint (44) to the torsion shaft (32a) of a reel support arm (12) and/or the shaft (32b) of an auger conveyor (34) and is connected via a second joint (46) to the side wall (14).

7. The header (2) according to any of the preceding claims, **characterized in that** the coupling element (42) is connected to the torsion shaft (32a) of a reel support arm (12) and/or the shaft (32b) of an auger conveyor (34) via a bearing (48), which allows rotational movements of the torsion shaft (32a) and/or the shaft (32b) of an auger conveyor (34).

8. The header (2) according to any of the preceding claims, **characterized in that** the side wall (14) is connected to the frame part (24a, 24c) via a hinge (50), a ball joint (52) and/or a connecting body (54) made of an elastomeric material.

9. The header (2) according to any of the preceding claims, **characterized in that** the torsion shaft (32a) is connected to at least two reel support arms (12) by means of which the height position of the reel (8b) mounted thereon is adjustable, the torsion shaft (32a) is mounted on at least two bearings at a distance from one another, and the coupling element (42) acts on the torsion shaft (32a) at the end outside the intermediate space between the two bearings.

10. The header (2) according to any of the preceding claims, **characterized in that** a mechanical end stop is formed on the torsion shaft (32a) in at least one movement direction.

11. The header (2) according to any of the preceding claims, **characterized in that** the support point (60) can be displaced with an actuating drive and/or the coupling rod (56) is variable in length with an actuating drive.

12. The header (2) according to claim 1, **characterized in that** a motorized actuating drive is provided between the frame (22) or at least one frame part (24a, 24c) and the associated side wall (14), with which drive the side wall (14) is movable transversely to the working direction (A) of the header (2) and to the frame (22) or the respective associated frame part (24a, 24c).

13. The header (2) according to claim 12, **characterized in that** an electronic control or regulation, which operates the actuating drive, is connected to the actuating drive.

## Revendications

1. Barre de coupe (2) destinée à être montée sur une moissonneuse-batteuse comportant un cadre (22) s'étendant au moins essentiellement sur la largeur de travail (4) de la barre de coupe (2), lequel est composé de plusieurs parties de cadre (24a, 24b, 24c), lesquelles s'étendent respectivement sur une largeur de travail partielle (28a, 28b, 28c) et qui sont connectées entre elles de manière articulée autour d'un axe (30) s'étendant au moins approximativement dans la le sens d'avancement de la barre de coupe (2), des éléments coupants (6) disposés sur la face avant de la barre de coupe (2) et connectés au cadre (22), des surfaces de transport (10) et des éléments de transport (8) pour le transport du produit de récolte coupé à partir des éléments coupants (6) vers un point d'enlèvement (26), desquels au moins certains des éléments de transport (8b, 34) disposés espacés de la surface de transport (10) dans le sens vertical sont maintenus dans un arbre (32b), qui s'étend perpendiculairement au sens d'avancement (A) de la barre de coupe (2) sur au moins une largeur de travail partielle (28a, 28b, 28c) de la barre de coupe (2), et des parois latérales (14), auxquelles des diviseurs d'épis (16) sont associés, lesquels limitent la largeur de travail (4) de la barre de coupe (2), **caractérisée en ce que** les parois latérales (14) sont conçues mobiles perpendiculairement au sens d'avancement (A) de la barre de coupe (2) et au cadre (22) ou aux parties de cadre (24a, 24c) respectivement associées.

2. Barre de coupe (2) selon la revendication 1, **caractérisée en ce que** l'au moins une paroi latérale (14) est connectée par sa partie supérieure (18) à travers une tige de couplage (56) à un point d'appui (60) situé dans la zone intérieure de la barre de coupe (2), le point d'appui (60) est disposé à une distance (62) dans le sens vertical par rapport à l'axe (30) et la paroi latérale (14) est connectée de manière mobile par sa partie inférieure (20) au cadre (22), ou la partie supérieure (20) de la paroi latérale (14) est connectée à travers une charnière (50), une articulation sphérique (52) et/ou un corps de liaison (54) en un matériau élastomère, qui forment un axe d'articulation, à la partie inférieure de la paroi latérale (14).

3. Barre de coupe (2) selon la revendication 2, **caractérisée en ce qu'**au moins certains des éléments de transport (8b, 34) disposés espacés dans le sens vertical de la surface de transport (10) sont maintenus dans un arbre (32b) qui s'étend perpendiculairement au sens d'avancement de la barre de coupe (2) sur au moins une largeur de travail partielle de la barre de coupe (2) et qui est maintenu de manière mobile dans le sens axial dans un palier lisse soutenu sur le cadre (22) ou sur les parties de cadre (24a, 24c), et ledit arbre est conçu de telle façon qu'il est utilisé comme tige de couplage.

4. Barre de coupe (2) selon la revendication 2 ou 3, **caractérisée en ce qu'**un arbre de torsion (32a) d'une structure porteuse de rabatteur (12), un arbre d'entraînement et/ou un arbre (32b) d'un transporteur à vis (32b) est utilisé comme tige de couplage (56).

5. Barre de coupe (2) selon l'une quelconque des revendications précédentes, **caractérisée en ce que** l'élément de couplage (42) n'est pas conçu élastique longitudinalement dans le sens de connexion (40).

6. Barre de coupe (2) selon l'une quelconque des revendications précédentes, **caractérisée en ce que** l'élément de couplage (42) est connecté à travers une première articulation (44) à l'arbre de torsion (32a) d'une structure porteuse de rabatteur (12) et/ou à l'arbre (32b) d'un transporteur à vis (34) et à travers une deuxième articulation (46) à la paroi latérale (14).

7. Barre de coupe (2) selon l'une quelconque des revendications précédentes, **caractérisée en ce que** l'élément de couplage (42) est connecté à l'arbre de torsion (32a) d'une structure porteuse de rabatteur (12) et/ou à l'arbre (32b) d'un transporteur à vis (34) à travers un palier (48), lequel permet des mouvements de rotation de l'arbre de torsion (32a) et/ou de l'arbre (32b) du transporteur à vis (34).

8. Barre de coupe (2) selon l'une quelconque des revendications précédentes, **caractérisée en ce que** la paroi latérale (14) est connectée à travers une charnière (50), une articulation sphérique (52) et/ou un corps de liaison (54) en un matériau élastomère à la partie de cadre (24a, 24c).

9. Barre de coupe (2) selon l'une quelconque des revendications précédentes, **caractérisée en ce que** l'arbre de torsion (32a) est connecté à au moins deux structures porteuses de rabatteur (12), à travers lesquelles la hauteur du rabatteur (8b) logé sur celles-ci peut être changée, l'arbre de torsion (32a) est logé au moins deux fois à distance et l'élément de couplage (42) entre en prise avec l'arbre de torsion (32a) à son extrémité en dehors de l'espace intermédiaire entre les deux paliers.

10. Barre de coupe (2) selon l'une quelconque des revendications précédentes, **caractérisée en ce qu'**une butée finale mécanique est conçue dans au moins un sens de déplacement sur l'arbre de torsion (32a).

11. Barre de coupe (2) selon l'une quelconque des revendications précédentes, **caractérisée en ce que** le point d'appui (60) peut être déplacé au moyen d'un actionneur et/ou la tige de couplage (56) peut être modifiée en longueur au moyen d'un actionneur.

12. Barre de coupe (2) selon la revendication 1, **caractérisée en ce que,** entre le cadre (22) ou au moins une partie de cadre (24a, 24c) et la paroi latérale (14) correspondante, un actionneur motorisé est présent, au moyen duquel la paroi latérale (14) peut être déplacée perpendiculairement au sens d'avancement (A) de la barre de coupe (2) et au cadre (22) ou à la partie de cadre (24a, 24c) respectivement associée.

13. Barre de coupe (2) selon la revendication 12, **caractérisée en ce qu'**une commande ou une régulation électronique est raccordée à l'actionneur, laquelle fait fonctionner l'actionneur.
